# EUROPÄISCHE PATENTANMELDUNG

(11) **EP 0 826 760 A1**
(43) Veröffentlichungstag der Anmeldung: **04.03.1998**
(21) Anmeldenummer: 97114152.8
(22) Anmeldetag: 16.08.1997
(51) Int. Cl.: C10J 3/48, B01D 46/30, C10K 1/02

(54) **Reaktor zum Verbrennen oder Vergasen feinkörniger Kohle**

(30) Priorität: 24.08.1996 DE 19634288
(71) Anmelder: METALLGESELLSCHAFT AKTIENGESELLSCHAFT, 60323 Frankfurt am Main (DE)
(72) Erfinder: Albrecht, Johannes, Dr., 61206 Wöllstadt (DE); Vydra, Karel, Dr., 61231 Bad Nauheim (DE); Foerster, Malte, Dr., 40589 Düsseldorf (DE); Hannes, Klaus, Dr., 42579 Heiligenhaus (DE)

(57) **Zusammenfassung**

Im Reaktor wird beim Verbrennen oder Vergasen feinkörniger aschehaltiger fester Brennstoffe unter Zufuhr von sauerstoffhaltigem Gas bei Temperaturen im Bereich von 1100 °C bis 1800 °C ein Schlacketröpfchen enthaltendes Produktgas gebildet. Der Reaktor ist mit mindestens einem im oberen Bereich angeordneten Brenner ausgestattet, dem man Brennstoff und sauerstoffhaltiges Gas zuführt. Unterhalb des Brenners weist der Reaktor eine Brennkammer auf, die vom Produktgas abwärts durchströmt wird. Im Reaktor direkt unter der Brennkammer ist mindestens eine gasdurchlässige Schüttung aus Formkörpern angeordnet, wobei die Höhe der Schüttung mindestens 0,5 m beträgt. Unterhalb der Schüttung befindet sich ein Auslaß für flüssige Schlacke und ein Abzug für heißes Produktgas. Vorzugsweise befindet sich die Schüttung auf einem Rost, der mindestens teilweise auf einer gas- und flüssigkeitsdurchlässigen Leitvorrichtung angeordnet ist.

## Beschreibung

Die Erfindung betrifft einen Reaktor zum Verbrennen oder Vergasen feinkörniger aschehaltiger fester Brennstoffe unter Zufuhr von sauerstoffhaltigem Gas, wobei bei Temperaturen im Bereich von 1100 bis 1800°C ein Schlacketröpfchen enthaltendes Produktgas gebildet wird, mit mindestens einem, im oberen Bereich des Reaktors angeordneten Brenner, dem man Brennstoff und sauerstoffhaltiges Gas zuführt, und mit mindestens einer unterhalb des Brenners angeordneten Brennkammer, die vom Produktgas abwärts durchströmt wird.

Ein solcher Reaktor ist aus dem US-Patent 5 503 660 (dazu korrespondiert DE-A-43 18 385) bekannt. Hierbei ist die Brennkammer als weitgehend leerer Raum ausgebildet und mit einem Verbindungskanal versehen, der zu einem Abscheider führt. Im Abscheider befinden sich mehrere Schüttungen aus Formkörpern, durch die das Schlacketröpfchen enthaltende heiße Produktgas zunächst abwärts und dann aufwärts strömt. Dabei sammelt sich flüssige Schlacke im unteren Bereich des Abscheiders und wird von dort abgezogen. Es hat sich gezeigt, daß dieses Verfahren apparativ aufwendig ist und zu relativ hohen Energieverlusten führt.

Der Erfindung liegt die Aufgabe zugrunde, den Reaktor so auszugestalten, daß die Abscheidung der Schlacketröpfchen in seinem Innenraum wirksam erfolgen kann. Erfindungsgemäß wird dies beim eingangs genannten Reaktor dadurch erreicht, daß im Reaktor direkt unter jeder Brennkammer mindestens eine gasdurchlässige Schüttung aus Formkörpern angeordnet ist, wobei die Höhe jeder Schüttung mindestens 0,5 m beträgt, und daß unterhalb der Schüttung ein Auslaß für flüssige Schlacke und ein Abzug für heißes Produktgas angeordnet sind. Durch diese Ausgestaltung des Reaktors wird dafür gesorgt, daß das Produktgas gleichmäßig auf die Schüttung verteilt wird. Im Bereich unterhalb der Schüttung, dort, wo die Schlacke abwärts fließt und das heiße Gas sich davon entfernt, wird vermieden, daß Schlacke vom Produktgas mitgerissen wird.

Es empfiehlt sich, die Schüttung auf einem gas- und flüssigkeitsdurchlässigen Rost anzuordnen. Zweckmäßigerweise ist unterhalb des untersten Rostes eine Leitvorrichtung angeordnet, welche die vom Rost kommende flüssige Schlacke abwärts leitet. Diese Leitvorrichtung kann zusätzlich auch zum Stützen des Rostes ausgebildet sein. Die Leitvorrichtung ist so auszubilden, daß an ihren Oberflächen die Schlacke abwärts fließt und das heiße Produktgas abwärts und seitwärts abströmt. Für die Ausbildung der Leitvorrichtung gibt es mehrere Möglichkeiten, sie kann z. B. in Form von vertikalen Säulen oder aber auch in der Form mehrerer, nebeneinander angeordneter, vertikaler Platten ausgebildet sein. Die Platten können z. B. auch gemauerte Wände sein. Es hat sich gezeigt, daß die abwärts fließende Schlacke an der Oberfläche vertikaler Platten oder Wände mit guter Führung und Haftung abwärts fließt und daß eine solche Leitvorrichtung nur geringe Turbulenzen im Produktgas erzeugt.

Ein Teil der flüssigen Schlacke fließt an der Innenwand der Brennkammer abwärts und kann dort in einer Rinne aufgefangen und abgeleitet werden.

Eine weitere Ausgestaltung des Reaktors besteht darin, daß zwischen der Innenwand des Reaktors und der Schüttung eine Ringkammer zum Abwärtsleiten flüssiger Schlacke ausgebildet ist. Diese Ringkammer nimmt die sich an der Innenseite der Brennkammer sammelnde flüssige Schlacke auf und leitet sie so abwärts, daß der Kontakt mit dem abwärts strömenden heißen Produktgas verringert ist. Dadurch wird erreicht, daß die Möglichkeit des erneuten Mitreißens von Schlacke durch das Produktgas verringert ist.

Die Formkörper, welche die Schüttung bilden, haben z. B. Kugel- oder Eiform. Es ist ferner möglich, Raschigringe, Pallringe, Tetrapods, Sattelkörper oder auch zylindrische Körper zu verwenden; auch kommen unregelmäßig geformte Körper, wie sie etwa durch Brechen von Naturmaterialien entstehen, infrage. Eine Schüttung aus gleich großen Kugeln erzeugt vorteilhafterweise einen geringen Druckverlust im Gas. Bei Kugeln oder kugelähnlichen Körpern sowie allgemein bei den Formkörpern liegen die Durchmesser bzw. hydraulischen Durchmesser zumeist im Bereich von 30 bis 120 mm. Es kann zweckmäßig sein, direkt auf dem Rost eine Schicht von Formkörpern mit größerem Durchmesser anzuordnen als sie die in der Schüttung darüber befindlichen Formkörper haben. Als Material für die Formkörper kommt z. B. Keramik infrage.

Es ist möglich, daß der Reaktor mehrere, parallel arbeitende Brennkammern aufweist, auch können im Reaktor mehrere Schüttungen untereinander angeordnet sein.

Ausgestaltungsmöglichkeiten des Reaktors werden mit Hilfe der Zeichnung erläutert. Es zeigt:
Fig. 1 den Reaktor im Längsschnitt mit einer ersten Variante der Leitvorrichtung,
Fig. 2 einen Teil des Reaktors im Längsschnitt, geschnitten nach der Linie II-II in Fig. 1, mit einer zweiten Variante der Leitvorrichtung,
Fig. 3 einen Schnitt nach der Linie III-III in Fig. 2,
Fig. 4 eine dritte Variante der Leitvorrichtung, horizontal geschnitten wie in Fig. 3,
Fig. 5, 6 und 7 weitere Ausgestaltungen des Reaktors im Längsschnitt und
Fig. 8 und 9 die Zusammenschaltung mehrerer Reaktoren in der Sicht von oben.

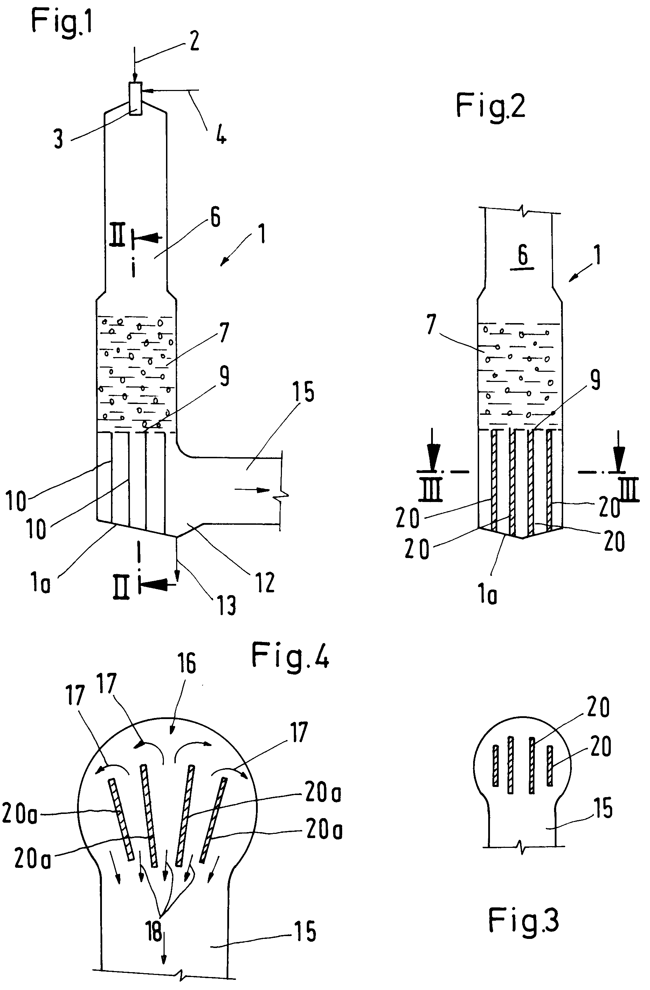

Dem Reaktor (1) der Fig. 1 führt man durch die Leitung (2) und den Brenner (3) feinkörnige, aschehaltige, feste Brennstoffe zu. Bei den zu verbrennenden oder zu vergasenden Brennstoffen handelt es sich im allgemeinen um Kohle oder Braunkohle, die pulverfein gemahlen sind, auch kommen Abfallstoffe und Klärschlamm infrage. Der Brennstoff kann trocken oder als Suspension dem Brenner zugeführt werden. Durch die Leitung (4) führt man dem Brenner sauerstoffhaltiges Gas, z. B. Luft, mit O₂ angereicherte Luft oder technisch reinen Sauerstoff zu. Das sauerstoffhaltige Gas kann mit Temperaturen im Bereich von etwa 20 - 600 °C zugeführt werden. Falls der Brennstoff vergast werden soll, kann durch die Leitung (4) zusätzlich Wasserdampf zugegeben werden. Der Druck im Reaktor (1) liegt üblicherweise im Bereich von 1 - 50 bar. Das Produktgas der Vergasung oder Verbrennung enthält üblicherweise Kohlenoxide und Wasserdampf sowie für den Fall der Vergasung Wasserstoff und Kohlenwasserstoffe.

Die durch den Brenner (3) gebildete Flamme ist abwärts in eine Brennkammer (6) gerichtet. Im Reaktor (1) befindet sich direkt unter der Brennkammer (6) eine Schüttung (7) aus Formkörpern, die z. B. Kugelform haben. Die Schüttung sorgt dafür, daß die zumeist nebelfeinen Tröpfchen flüssiger Schlacke, die sich im heißen, durch die Brennkammer (6) abwärts strömenden Produktgas befinden, agglomerieren. Gleichzeitig werden die agglomerierten Schlacketröpfchen in dem sich auf den Formkörpern bildenden Schlackefilm eingebunden. Der Schlackefilm fließt durch die Schüttung nach unten ab. Die Schüttung (7) ist auf einem gas- und flüssigkeitsdurchlässigen Rost (9) angeordnet. Zwischen dem Rost (9) und dem Reaktorboden (1a) befindet sich eine erste Variante einer Leitvorrichtung, die aus zahlreichen vertikalen Stäben oder Säulen (10) besteht. Die Leitvorrichtung dient dem Abwärtsleiten der flüssigen Schlacke und kann zusätzlich zum Stützen des Rostes (9) ausgebildet sein.

Flüssige Schlacke fließt abwärts durch den Rost (9) bis zum Boden (1a) des Reaktors (1), der schräg ausgebildet ist. Vom Schlackesumpf (12) wird dann die flüssige Schlacke durch die Leitung (13) abgezogen. Das heiße Produktgas, dessen Temperatur oberhalb der Schlackeschmelztemperatur liegt, strömt durch den Abzugskanal (15) ab und kann einer weiteren Behandlung oder Verwendung zugeführt werden. In einem Kraftwerk kann das Gas z. B. zum Erzeugen von elektrischer Energie in einer Gasturbine und anschließend zum Erzeugen von Wasserdampf in einem Abhitzekessel genutzt werden.

In der Brennkammer (6) liegen die Temperaturen im Bereich von 1100 bis 1800°C, und man sorgt dafür, daß die Verweilzeit des heißen Produktgases, das vom Brenner (3) kommt, in der Brennkammer im Bereich von 0,5 bis etwa 4 sec liegt. Daraus ergibt sich ein Verhältnis der Höhe der Brennkammer (6) zu ihrem Durchmesser von 2:1 bis 8:1 und zumeist 3:1 bis 6:1. Der hier gemeinte Durchmesser der Brennkammer wird auf mittlerer Höhe der Brennkammer gemessen.

Im Bereich der Schüttung (7) sorgt man für eine Leerrohrgeschwindigkeit des Gases von zumeist 1,5 bis 6 m/sec. Um in der Schüttung (7) die erwünscht niedrigen Gasgeschwindigkeiten zu erreichen, wird der Durchmesser des Reaktors im Bereich der Schüttung zweckmäßigerweise größer als der mittlere Durchmesser der Brennkammer (6) ausgebildet sein. Das Verhältnis von Höhe zu Durchmesser der Schüttung liegt üblicherweise im Bereich von 0,8:1 bis 3:1, und die Höhe der Schüttung beträgt mindestens 0,5 m und meistens höchstens 3 m.

Im Bereich unter dem Rost (9) sorgt man vorteilhafterweise dafür, daß dort das heiße Produktgas nur wenig verwirbelt wird, um zu verhindern, daß abwärts fließende oder abtropfende Schlacke vom heißen Gas durch den Kanal (15) mitgerissen wird. Es ist deshalb vorteilhaft, wenn das von der Leitvorrichtung eingenommene Volumen gering ist, um niedrige Gasgeschwindigkeiten zu gewährleisten. Gemäß Fig. 1 ist die Leitvorrichtung deshalb in Form von mehreren Säulen (10) ausgebildet.

Gemäß Fig. 2 und 3 besteht die Leitvorrichtung aus vertikalen, parallelen Platten (20). Die Platten (20) sind so angeordnet, daß das heiße Gas mit möglichst wenig Behinderung vom Rost (9) in den Abzugskanal (15) strömen kann, vgl. auch Fig. 3. Es hat sich gezeigt, daß die vom Rost (9) kommende Schlacke entlang der Oberfläche der Platten (20) sehr gut nach unten zum Boden (1a) des Reaktors abgeleitet wird und die Tendenz für das heiße Gas nur gering ist, diese an den Platten abwärts fließende Schlacke mitzureißen. Die Platten können z. B. auch in Form gemauerter Wände ausgebildet sein.

Fig. 4 zeigt eine Variante der Leitplatten (20a), die nicht mehr parallel zueinander wie in Fig. 3, sondern nunmehr etwas keilförmig gestellt sind. Durch die keilförmige Anordnung wird der Strömungswiderstand für das Gas zwischen benachbarten Platten zum Kanal (15) hin etwas vergößert. Gleichzeitig wird der Strömungswiderstand im rückwärtigen Bereich (16) etwas verringert. Dies führt dazu, daß ein vergrößerter Anteil des heißen Gases den durch die Pfeile (17) angedeuteten Umweg zum Kanal (15) nimmt, wodurch die Gasgeschwindigkeit im Bereich der Pfeile (18) verringert wird. Durch die Anordnung der Fig. 4 wird so die Tendenz des heißen Produktgases, an den Platten (20a) anhaftende Schlacke mitzureißen, weiter verringert.

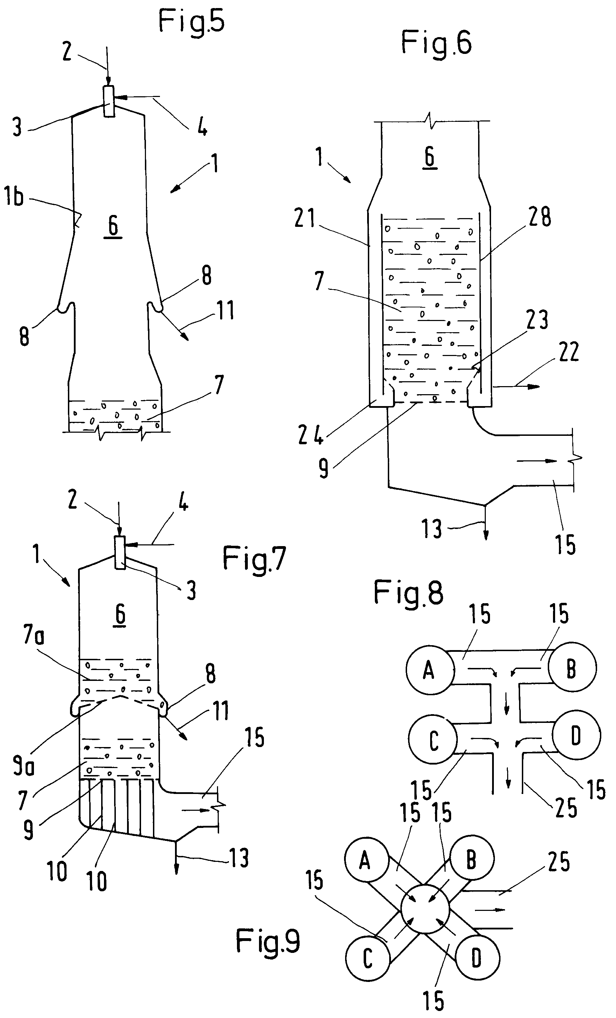

Beim Reaktor (1) der Fig. 5 ist die Innenwand (1b) der Brennkammer (6) mit einer umlaufenden Rinne (8) versehen. Schlacke, die an der Wand (1b) abwärts fließt, sammelt sich in der Rinne (8) und wird durch die Leitung (11) abgezogen.

Im Reaktor gemäß Fig. 6 befindet sich die Schüttung (7) innerhalb einer zylindrischen Stützwand (28). Dadurch wird zwischen der Innenwand des Reaktors (1) und der Stützwand (28) eine Ringkammer (21) gebildet. Flüssige Schlacke, die an der Innenwand der Brennkammer (6) abwärts fließt, gelangt in diese Ringkammer (21) und sammelt sich dort. Der untere Bereich der Ringkammer (21) ist syphonartig ausgebildet, wie das in Fig. 6 dargestellt ist. Ein Stützgitter (23) verhindert, daß Formkörper der Schüttung (7) in den Syphonbereich (24) eindringen. Der Schlackesumpf im Syphonbereich (24) bildet eine Gassperre und verhindert so, daß heißes Produktgas durch die Ringkammer (21) strömt. Die flüssige Schlacke fließt durch das Stützgitter (23) hindurch in die Schüttung und durch den Rost (9) nach unten. Alternativ hierzu kann auf den Syphon verzichtet werden, wenn man die Schlacke durch die Leitung (22) abzieht. Zur Vereinfachung wurde in Fig. 6 eine Leitvorrichtung unter dem Rost (9) nicht dargestellt.

Der Reaktor der Fig. 7 weist zwei Schüttungen (7) und (7a) und zwei Roste (9) und (9a) auf. Flüssige Schlacke, die auf die Oberseite des Rostes (9a) gelangt, fließt zur Seite abwärts in eine Sammelrinne (8) und wird durch die Leitung (11) abgezogen. Die Oberseite des Rostes (9a) kann mit Rinnen versehen sein, die das Abfließen der Schlacke begünstigen, was aber in der Zeichnung nicht dargestellt ist. Weitere Schlacke wird mit Hilfe der Schüttung (7) aus dem Gas abgeschieden, wie das bereits zusammen mit Fig. 1 erläutert wurde. Es kann zweckmäßig sein, die obere Schüttung (7a) aus groberen Formkörpern als die Formkörper der unteren Schüttung (7) zu bilden.

Fig. 8 und 9 zeigen in schematischer Darstellung im Blick von oben vier Reaktoren (A), (B), (C) und (D), die parallel betrieben werden. Ihre Abzugskanäle (15) für das heiße Produktgas münden in eine zentrale Ableitung (25), die zur nicht dargestellten weiteren Verwendung des Produktgases führt. Es kann zweckmäßig sein, anstelle eines sehr großen Reaktors mehrere kleine Reaktoren parallel zu betreiben.

## Patentansprüche

1. Reaktor zum Verbrennen oder Vergasen feinkörniger aschehaltiger fester Brennstoffe unter Zufuhr von sauerstoffhaltigem Gas, wobei bei Temperaturen im Bereich von 1100 bis 1800°C ein Schlacketröpfchen enthaltendes Produktgas gebildet wird, mit mindestens einem, im oberen Bereich des Reaktors angeordneten Brenner, dem man Brennstoff und sauerstoffhaltiges Gas zuführt, und mit mindestens einer unterhalb des Brenners angeordneten Brennkammer, die vom Produktgas abwärts durchstömt wird, dadurch gekennzeichnet, daß im Reaktor direkt unter jeder Brennkammer mindestens eine gasdurchlässige Schüttung aus Formkörpern angeordnet ist, wobei die Höhe jeder Schüttung mindestens 0,5 m beträgt, und daß unterhalb der Schüttung ein Auslaß für flüssige Schlacke und ein Abzug für heißes Produktgas angeordnet sind.

2. Reaktor nach Anspruch 1, dadurch gekennzeichnet, daß sich die Schüttung auf einem Rost befindet, der mindestens teilweise auf einer gas- und flüssigkeitsdurchlässigen Leitvorrichtung angeordnet ist.

3. Reaktor nach Anspruch 2, dadurch gekennzeichnet, daß die Leitvorrichtung mehrere, nebeneinander angeordnete vertikale Platten aufweist.

4. Reaktor nach einem der Ansprüche 1 - 3, dadurch gekennzeichnet, daß die Brennkammer an der Innenwand eine Auffangrinne für flüssige Schlacke aufweist.

5. Reaktor nach Anspruch 1 oder einem der folgenden, dadurch gekennzeichnet, daß zwischen der Innenwand des Reaktors und der Schüttung eine Ringkammer zum Abwärtsleiten flüssiger Schlacke ausgebildet ist.

6. Reaktor nach Anspruch 1 oder einem der folgenden, dadurch gekennzeichnet, daß die Schüttung aus Formkörpern mit unterschiedlichen Korngrößen gebildet ist.

7. Reaktor nach Anspruch 1 oder einem der folgenden, dadurch gekennzeichnet, daß die Brennkammer ein Verhältnis von vertikal gemessener Höhe zum horizontal gemessenen Durchmesser von 2:1 bis 8:1 aufweist.
